# EUROPÄISCHE PATENTSCHRIFT

(11) **EP 1 360 458 B1**
(45) Veröffentlichungstag und Bekanntmachung des Hinweises auf die Patenterteilung: **03.10.2012**
(21) Anmeldenummer: 02706603.4
(22) Anmeldetag: 19.01.2002
(51) Int. Cl.: G01C 21/34, G08G 1/0968

(54) **VERFAHREN ZUM AUSTAUSCHEN VON NAVIGATIONSINFORMATIONEN**
METHOD FOR EXCHANGING NAVIGATION INFORMATION
PROCEDE D'ECHANGE D'INFORMATIONS DE NAVIGATION

(30) Priorität: 09.02.2001 DE 10105897
(43) Veröffentlichungstag der Anmeldung: 12.11.2003
(73) Patentinhaber: ROBERT BOSCH GMBH, 70442 Stuttgart (DE)
(72) Erfinder: BUECHER, Andreas, 37520 Osterrode (DE); FRIEDRICHS, Arne, 38114 Braunschweig (DE); DRAEGER, Gerd, 38102 Braunschweig (DE); SKWAREK, Volker, 31162 Bad Salzdetfurth (DE)
(86) Internationale Anmeldenummer: PCT/DE2002/000161
(87) Internationale Veröffentlichungsnummer: WO 2002/065056

(56) Entgegenhaltungen:
- WO-A-00/66975
- DE-A- 19 651 146

## Beschreibung

Die vorliegende Erfindung betrifft ein Verfahren, um Navigationsinformationen zwischen einem Endgerät, insbesondere einem Offboard-Fahrzeugnavigationsgerät, und einer Zentrale auszutauschen, wobei die Navigationsinformationen Routeninformationen für wenigstens eine Route zwischen einem Startpunkt und einem Zielpunkt umfassen.

### Stand der Technik

Es ist bekannt, dass zur Routensuche eine Verbindung zwischen einem Start- und einem Zielpunkt nach bestimmten Kriterien gesucht wird. Zu diesem Zweck ist die Eingabe von Zielführungselementen erforderlich, die zumindest den Start- und den Zielpunkt definieren. Eine derartige Eingabe kann beispielsweise über eine dem Fahrzeugnavigationsgerät zugeordnete Tastatur erfolgen. Wenn das Fahrzeugnavigationsgerät eine Zielführungselement-Datenbank mitführt, können die eingegebenen Zielführungselementdaten unmittelbar verifiziert werden, indem sie mit den Einträgen der Zielführungselement-Datenbank verglichen werden. Neuartige Fahrzeugnavigationsgeräte, die beispielsweise als hybride Fahrzeugnavigationsgeräte oder als Offboard-Fahrzeugnavigationsgeräte bezeichnet werden, sehen keine vollständige Zielführungselement-Datenbank innerhalb des Navigationsgeräts vor. Weiterhin wird bei derartigen Fahrzeugnavigationsgeräten der Vorgang der Routensuche aus den Fahrzeugnavigationsgerät ausgelagert und in einer Zentrale durchgeführt. Es existieren bekannte Offboard-Navigationsverfahren, die eine Route zwischen einem Start- und einen Zielpunkt übertragen. Diese bekannten Verfahren ermöglichen jedoch keine Offline-Zieleingabe und sind nicht in der Lage, Routen zu segmentieren oder während des Zielführungsvorganges die berechnete Route in einer verkürzten Prozedur zu aktualisieren.

Aus der DE 19651146 A ist ein Verfahren zum Austausch von Navigationsinformationen und einer Zentrale bekannt. Die Startadresse, d.h. die aktuelle Position des Endgerätes wird erst dann abgegeben, wenn eine hinreichend genaue Lokalisierung garantiert ist. Bei Ungenauigkeiten wird eine Fehlermeldung generiert. Die Adressen werden mittels einer "Route Request Message" zur Zentrale übertragen und dort auf Korrektheit, Vollständigkeit und Eindeutigkeit geprüft. In der Zentrale wird die Route anhand der übermittelten Informationen und der Verkehrslage erstellt und zum Endgerät des Fahrzeugs übertragen.

Aus der WO 00/66975 A1 ist es bekannt, dass die Zentrale nur Teilrouten zum Endgerät eines Fahrzeugs überträgt, um den aktuellen Übertragungsbedarf zu reduzieren sowie die Speicherkapazität des Endgerätes und zu ermöglichen, dass der Nutzer sofort mit der Navigation beginnen kann.

### Vorteile der Erfindung

Dadurch, dass bei dem erfindungsgemäßen Verfahren die folgenden Schritte vorgesehen sind:
a) Verifizieren einer Startpunkt-Referenz-ID und/oder Verifizieren von Startkoordinaten und Verifizieren einer Zielpunkt-Referenz-ID und/oder Verifizieren von Zielpunktkoordinaten, und
b) Berechnen von Routendaten und Übermitteln einer zumindest Teile der Routendaten enthaltenden Routen-Antwort an das Endgerät, wobei die Routendaten zumindest in Abhängigkeit von der Länge der Route vom Startpunkt zum Zielpunkt entweder zumindest einer vollständigen Route vom Startpunkt zum Zielpunkt oder zumindest einer Teilroute vom Startpunkt zu einem Zwischenpunkt entsprechen, der zwischen Startpunkt und Zielpunkt liegt, wobei der Zwischenpunkt eine verifizierte Zwischenpunkt-Referenz-ID und/oder verifizierte Zwischenpunktkoordinaten aufweist, wobei die verifizierte Zwischenpunkt-Referenz-ID und/oder die verifizierten Zwischenpunktkoordinaten von der Zentrale an das Endgerät übertragen werden, wobei das Endgerät ein mobiles Endgerät ist, und wobei über das Endgerät oder über eine separate Einrichtung vor dem Erreichen des Zwischenpunktes weitere Routendaten von der Zentrale angefordert werden, wobei die weiteren Routendaten entweder zumindest einer vollständigen Route vom Zwischenpunkt zum Zielpunkt oder zumindest einer Teilroute vom Zwischenpunkt zu einem weiteren Zwischenpunkt entsprechen, und wobei das mobile Endgerät oder die separate Einrichtung bei der Anforderung von weiteren Routendaten die verifizierte Zwischenpunkt-Referenz-ID und/oder die verifizierten Zwischenpunktkoordinaten an die Zentrale überträgt,
   wird eine segmentierte Übertragung von Routen und Routenkorridoren ermöglicht, die die Einbeziehung von aktuellen Verkehrseinflüssen und/oder -störungen ermöglicht. Weiterhin kann die Übertragungszeit durch die Segmentierung der Route auf die Bedürfnisse des Endgerätes angepasst werden. Dies gilt insbesondere auch bei Falschfahrten für die Übertragung von Alternativrouten.

Bei dem erfindungsgemäßen Verfahren ist vorgesehen, dass der Zwischenpunkt eine verifizierte Zwischpunkt-Referenz-ID und/oder verifizierte Zwischenpunktkoordinaten aufweist. Unter verifizierten Referenz-IDs beziehungsweise verifizierten Koordinaten werden im vorliegenden Zusammenhang Referenz-IDs beziehungsweise Koordinaten verstanden, die entsprechenden Zielführungselement-Datenbankeinträgen eindeutig zugeordnet werden können, die in einer Datenbank gespeichert sind, auf die die Zentrale zugreifen kann.

Im Zusammenhang mit der verifizierten Zwischenpunkt-Referenz-ID und/oder den verifizierten Zwischenpunktkoordinaten sieht das erfindungsgemäße Verfahren vor, dass die verifizierte Zwischenpunkt-Referenz-ID und/oder die verifizierten Zwischenpunktkoordinaten von der Zentrale an das Endgerät übertragen werden. Durch eine derartige Übertragung von für die Zentrale spezifischen Inhalten wird die Übertragung von erneuten Routenanfragen kürzer. Weiterhin ist keine erneute Eingabe des Ziels durch den Benutzer erforderlich.

Selbstverständlich ist das erfindungsgemäße Verfahren nicht darauf beschränkt, die Route in drei Teilrouten zu unterteilen, sondern es ist auch eine Unterteüung in mehr als drei Teilrouten möglich. Die Anwahl der Teilrouten und die Länge der Teilrouten kann dabei insbesondere an die Länge der Gesamtroute angepasst werden. Insbesondere bei kurzen Routen kann es vorteilhaft sein, überhaupt keine Unterteilung der Route vorzunehmen, sondern die vollständigen Routendaten direkt an das Endgerät oder die separate Einrichtung zu übermitteln.

Zum Zweck der Übertragung der verifiziert Zwischenpunkt-Referenz-ID und/oder der verifizierten Zwischenpunktkoordinaten wählt die Zentrale bei der Routenberechnung vorzugsweise nur solche Zwischenpunkte, denen entsprechende Zielführungselemerlt-Datenbankeinträge eindeutig zugeordnet sind, so dass die entsprechenden Referenz-IDs und/oder die entsprechenden Koordinaten sofort verfügbar sind.

Zusätzlich oder alternativ kann bei dem erfindungsgemäßen Verfahren vorgesehen sein, dass die Zentrale beim Schritt b) weiterhin eine eindeutige Routen-ID an das Endgerät oder eine separate Einrichtung überträgt.

In diesem Zusammenhang ist vorzugsweise weiterhin vorgesehen, dass das mobile Endgerät oder die separate Einrichtung bei der Anforderung von weiteren Routendaten die Routen-ID an die Zentrale überträgt. Dadurch kann der Zugriff auf bereits berechnete Routendaten in der Zentrale vereinfacht werden. Weiterhin ist es denkbar, derartige Routen-IDs beispielsweise auch für die Berechnung der von der Zentrale erbrachten Serviceleistungen zu verwenden.

Bei einer bevorzugten Ausführungsform sieht das erfindungsgemäße Verfahren weiterhin vor, dass der Schritt a) die folgenden Teilschritte umfasst:
a1) Übermitteln einer Adressen-Auflösungs-Anfrage an die Zentrale,
a2) Übermitteln einer Adressen-Auflösungs-Antwort von der Zentrale an das Endgerät oder eine separate Einrichtung, und
a3) Übermitteln einer Routen-Anfrage an die Zentrale.

Vor der Durchführung des Schrittes a1) werden dabei vorzugsweise vom Benutzer Zielführungselementdaten eingegeben, die zumindest ein Zielführungselement betreffen. Anschließend werden die eingegebenen Zielführungselementdaten durch die Adressen-Auflösungs-Anfrage an die Zentrale übermittelt, vorzugsweise über eine Online-Verbindung zwischen dem Endgerät und der Zentrale. Die Verifizierung der Startpunkt-Referenz-ID und/oder die Verifizierung der Startkoordinaten und die Verifizierung der Zielpunkt-Referenz-ID und/oder die Verifizierung der Zielpunktkoordinaten kann dann beispielsweise durch ein mehrstufiges Kommunikationsverfahren erfolgen, das zwischen der Zentrale und dem Endgerät abläuft. Wenn beispielsweise einige Zielführungselemente, wie beispielsweise Orts- oder Straßennamen, nicht eindeutig entsprechenden Datenbankeinträgen zugeordnet werden können, kann die Zentrale eine Auswahl von Datenbankeinträgen zurückliefern, aus denen der Benutzer dann den zutreffenden Eintrag auswählen kann. In diesem Zusammenhang ist es möglich, die entsprechenden Referenz-IDs direkt mit der Auswahl zu übermitteln oder die Referenz-ID für einen vom Benutzer ausgewählten Eintrag erst als Antwort auf die Auswahl zu übermitteln.

Bei dem erfindungsgemäßen Verfahren ist vorzugsweise weiterhin vorgesehen, dass beim Schritt a1) oder beim Schritt a2) einer oder mehrere der folgenden Parameter an die Zentrale übermittelt werden:
- geographische Koordinaten,
- eine oder mehrere Adressen als Menge von Attributen wie Ort, Straße, Hausnummer, Postleitzahl,
- eine oder mehrere in der Zentrale bereits verifizierte Referenz-IDs,
- eine oder mehrere Telefonnummern,
- einen oder mehrere Kartenausschnitte,
- geometrische Streckenbeschreibungen,
- eine oder mehrere textliche Umschreibungen,
- eine oder mehrere Tonaufzeichnungen,
- Foto- und/oder Videoaufnahmen,
- Kundeninformationen, insbesondere Nutzer-/Benutzungsprofil wie Kraftfahrzeugtyp, Geschwindigkeitsrahmen, Routenoptimierungswünsche.

Bezüglich des Teilschrittes a2) sieht das erfindungsgemäße Verfahren dabei vorzugsweise weiterhin vor, dass einer oder mehrere der folgenden Parameter übermittelt werden:
- eindeutige oder teilweise eindeutige Referenz-IDs für die einzelnen Adressen oder deren Teilattribute wie Ort, Straße, Hausnummer, Postleitzahl,
- Zeitinformationen als Menge von Attributen wie Jahr, Monat, Tag, Stunde, Minute, Sekunde,
- Nachrichtenzeitstempel,
- Reisezeitwunsch.

Eine derartige Durchführung der Teilschritte a1) und a2) ergibt eine flexible und komfortable Benutzerführung bei der Eingabe von Zielführungselementdaten zur Verifizierung von Start- und Endpunkten.

Das erfindungsgemäße Verfahren sieht vorzugsweise weiterhin vor, dass beim Schritt a3) die eindeutig verifizierte Startpunkt-Referenz-ID und/oder die eindeutig verifizierten Startkoordinaten und die eindeutig verifizierte Zielpunkt-Referenz-ID und/oder die eindeutig verifizierten Zielpunktkoordinaten übermittelt werden, um die Routenberechnung auf der Grundlage von eindeutigen Informationen durchführen zu können.

In diesem Zusammenhang kann das erfindungsgemäße Verfahren weiterhin vorsehen, dass beim Schritt a3) weiterhin eine oder mehrere der folgenden Informationen übermittelt werden:
- ein oder mehrere Abbruchkriterien für die Routenberechnung, insbesondere maximale Datenmenge, maximale Wartezeit bis zum Datentransfer, Entfernung,
- Codierung von Endgerätefähigkeiten, insbesondere bezüglich der Darstellungsfähigkeiten und/oder der Audiofähigkeiten,
- Benutzerpräferenzen, insbesondere die Art von gewünschten Zusatzinformationen in den Routendaten,
- Zeitinformationen als Menge von Attributen wie Jahr, Monat, Tag, Stunde, Minute, Sekunde,
- personifiziertes Fahrprofil,
- Verkehrsinformationen und/oder Routenstörungen (zum Beispiel manuell, TMC, und so weiter).

Die im Zusammenhang mit dem Verfahrensschritt b) durchgeführte Übermittlung der Routen-Antwort an das Endgerät umfasst bei dem erfindungsgemäßen Verfahren vorzugsweise eine oder mehrere der folgenden Informationen:
- Kartenzusatzattribute, insbesondere Distanzen und/oder Fahrtdauer, Straßenklassen, Straßennamen, grafische und oder akustische Zielführungsanweisungen,
- Bilder, Foto- und/oder Videoaufnahmen,
- Tonaufnahmen,
- Verkehrsmeldungen,
- Zusatzinformationen wie Werbung
- Datenkopfinformationen, insbesondere Sprach - und/oder Länderkennung, Bezugssystem, verwendete Codierung, Koordinatencodierung, Routendatenformat, Flags über vorhandene Zusatzattribute,
- Zeitinformationen als Menge von Attributen wie Jahr, Monat, Tag, Stunde, Minute, Sekunde,
- Nachrichtenzeitstempel,
- Reisezeit.

Im Zusammenhang mit dem erfindungsgemäßen Verfahren ist vorzugsweise weiterhin vorgesehen, dass in dem Endgerät und/oder in der separaten Einrichtung verifizierte Startpunkt-Referenz-IDs und/oder verifizierte Start koordinaten und/oder verifizierte Zielpunkt-Referenz-IDs und/oder verifizierte Zielpunktkoordinaten gespeichert werden. Auf diese Weise kann ein nur wenig Speicherplatz erfordernder Datenbestand für häufig angefahrene Start- und Zielpunkte aufgebaut werden.

In ähnlicher Weise kann bei dem erfindungsgemäßen Verfahren vorgesehen sein, dass in der Zentrale benutzerabhängige und/oder endgeräteabhängige verifizierte Startpunkt-Referenz-IDs und/oder verifizierte Startkoordinaten und/oder verifizierte Zielpunkte-Referenz-IDs und/oder verifizierte Zielpunktkoordinaten gespeichert werden. Diese Daten können einem Benutzer beziehungsweise einem Endgerät beispielsweise zur Verfügung gestellt werden, nachdem sich der Benutzer beziehungsweise das Endgerät entsprechend identifiziert hat, wobei auch in diesem Fall eine Art persönliches Adressbuch verwirklicht werden kann.

Bei dem erfindungsgemäßen Verfahren ist vorzugsweise weiterhin vorgesehen, dass einer oder mehrere der Teilschritte a1), a2) und a3) wiederholt werden, wenn nach einer vorherbestimmten Zeitspanne keine Antwort eingeht. Zu diesem Zweck können zu definierten Zeitpunkten entsprechende Zeitzähler gestartet werden, bei deren Ablauf der entsprechende Teilschritt erneut durchgeführt wird.

Bei dem erfindungsgemäßen Verfahren kann vorgesehen sein, dass die separate Einrichtung durch ein Mobilfunkendgerät gebildet ist. Dabei ist es beispielsweise möglich, einen oder mehrere der Schritte a1), a2) und a3) mit Hilfe eines Mobiltelefons durchzuführen, beispielsweise über sogenannte SMS-Nachrichten.

Weiterhin kann vorgesehen sein, dass die separate Einrichtung durch einen Computer gebildet ist, beispielsweise einen mit dem Internet verbundenen Computer. Am Ende des Kommunikationsprozesses zwischen dem Computer und der Zentrale kann dann beispielsweise die Übermittlung einer Routen-ID von der Zentrale an den Computer erfolgen, wobei eine derartige Routen-ID beispielsweise dazu vorgesehen sein kann, vom Benutzer in ein Fahrzeugnavigationsgerät eingegeben zu werden, um eine zu diesem Zeitpunkt bereits berechnete Route herunterzuladen.

Das erfindungsgemäße Verfahren kann vorsehen, dass die Teilschritte a1) und a2) solange abwechselnd wiederholt werden, bis zumindest eine Startpunkt-Referenz-ID und/oder Startkoordinaten und eine Zielpunkt-Referenz-ID und/oder Zielpunktkoordinaten verifiziert sind, und zwar unabhängig davon, ob die Kommunikation zwischen der Zentrale und dem Endgerät in Form eines Fahrzeugnavigationsgerätes, eines Mobilfunkendgerätes oder eines Computers erfolgt.

Bei einigen Ausführungsformen des erfindungsgemäßen Verfahrens kann vorgesehen sein, dass der Teilschritt a2) nur dann ausgeführt wird, wenn eine Startpunkt-Referenz-ID und/oder Startkoordinaten und eine Zielpunkt-Referenz-ID und/oder Zielpunktkoordinaten noch nicht verifiziert wurde. Beispielsweise ist es möglich, dass ein Benutzer eine Route direkt mit eindeutigen Referenz-IDs anfordert, die beispielsweise aus einer in dem Endgerät gespeicherten Liste ausgewählt wurden. Ebenso ist es denkbar, dass die vom Benutzer eingegebenen Zielführungselementdaten eindeutig sind. In einem derartigen Fall kann zur Beschleunigung des Verfahrens vorgesehen sein, dass die Zentrale direkt durch die Übermittlung der Routendaten antwortet.

Jede Zentrale, die zur Teilnahme an dem erfindungsgemäßen Verfahren ausgelegt ist, fällt in den Schutzbereich der zugehörigen Ansprüche.

Gleiches gilt für jedes Endgerät, insbesondere jedes Fahrzeugnavigationsgerät, das zur Teilnahme an dem erfindungsgemäßen Verfahren ausgelegt ist.

### Zeichnungen

Die Erfindung wird nachfolgend anhand der zugehörigen Zeichnungen noch näher erläutert.

Es zeigen:
- Figur 1: ein Beispiel für eine Nachrichtensequenz bei einem fehlerfreien Ablauf einer Ausführungsform des erfindungsgemäßen Verfahrens,
- Figur 2: ein Beispiel für den Ablauf einer Ausführungsform des erfindungsgemäßen Verfahrens, bei dem ein Zeitzähler nach dem Absetzen der Adressen-Auflösungs-Anfrage abläuft,
- Figur 3: ein Beispiel für den Ablauf einer Ausführungsform des erfindungsgemäßen Verfahrens, bei dem ein Zeitzähler nach dem Absetzen einer Routen-Anfrage abläuft,
- Figur 4: ein Beispiel für den Ablauf einer Ausführungsform des erfindungsgemäßen Verfahrens, bei dem die Routenberechnung unmittelbar nach einer eindeutigen Adressenauflösung erfolgt, und
- Figur 5: ein Beispiel für den Ablauf einer Ausführungsform des erfindungsgemäßen Verfahrens unter Praxisbedingungen.

### Beschreibung der Ausführungsbeispiele

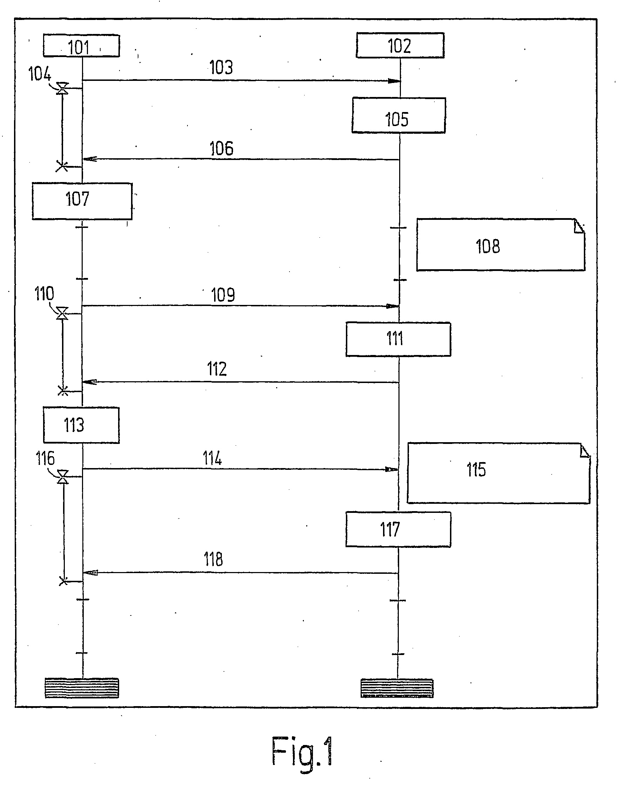

Figur 1 zeigt ein Beispiel für eine Nachrichtensequenz bei einem fehlerfreien Ablauf einer Ausführungsform des erfindungsgemäßen Verfahrens, wobei sich die Bedeutung der in Figur 1 verwendeten Bezugszeichen BZ aus der folgenden Tabelle 1 ergibt.

**Tabelle 1**

| BZ | Bedeutung |
|---|---|
| 101 | Endgerät |
| 102 | Zentraleinheit |
| 103 | Adressen-Auflösungs-Anfrage (Adresse) |
| 104 | Zeitzähler |
| 105 | Adressenauflösung |
| 106 | Adressen-Auflösungs-Antwort ([teilweise] aufgelöste Adressen) |
| 107 | Benutzerauswahl |
| 108 | Der obige Ablauf wiederholt sich solange, bis die Adresse eindeutig aufgelöst werden konnte. |
| 109 | Routenanfrage (Start, Ziel) |
| 110 | Zeitzähler |
| 111 | Routenberechnung |
| 112 | Routenantwort ([Teil-] Route) |
| 113 | Zielführung |
| 114 | Routenanfrage (Start, Ziel) |
| 115 | Da die Zentraleinheit die Route im Allgemeinen in mehrere Teile unterteilt, wird das Endgerät mehrere Routenanfragen stellen müssen, bevor das Ziel erreicht wird. |
| 116 | Zeitzähler |
| 117 | Routenberechnung |
| 118 | Routenantwort ([Teil-] Route) |

Gemäß der Darstellung von Figur 1 ergibt sich der folgende Ablauf: zunächst sendet ein Endgerät 101, beispielsweise ein Offboard-Fahrzeugnavigationsgerät, eine Adressen-Auflösungs-Anfrage 103 an die Zentraleinheit 102. Die Adressen-Auflösungs-Anfrage enthält dabei vom Benutzer in geeigneter Weise eingegebene Zielführungselementdaten. Die Zielführungselementdaten können dabei beispielsweise Orts- und Straßennamen in der vermuteten oder abgekürzten Schreibweise umfassen. Die Eingabe dieser Daten kann über eine Tastatur, eine Spracheingabeeinrichtung oder in irgendeiner geeigneten Weise erfolgen im Block 105 führt die Zentraleinheit 102 die Adressenauflösung durch. Zu diesem Zweck vergleicht die Zentraleinheit 102 beispielsweise die mit der Adressen-Auflösungs-Anfrage 103 übermittelten Zielführungselementdaten mit in der Zentraleinheit 102 zur Verfügung stehenden Datenbankeinträgen, um eine Startpunkt-Referenz-ID und/oder Startkoordinaten und eine Zielpunkt-Referenz-ID und/oder Zielpunktkoordinaten zu verifizieren, soweit dies auf der Grundlage der übermittelten Zielführungselementdaten möglich ist. Soweit einem oder mehreren Zielführungselementen keine eindeutige Referenz-ID zugeordnet werden kann, werden die bezüglich diesem Zielführungselement wahrscheinlichsten Datenbankeinträge beispielsweise zu einer Liste zusammengestellt. Nach der Adressenauflösung übermittelt die Zentraleinheit 102 eine Adressen-Auflösungs-Antwort 106 an das Endgerät 101. Der rechtzeitige Eingang der Adressen-Auflösungs-Antwort wird,dabei von dem Endgerät 101 überwacht, indem kurz nach dem Absenden der Adressen-Auflösüngs-Anfrage 103 ein Zeitzähler 104 gestartet wird, der auf einen vorherbestimmten Wert eingestellt ist. Im dargestellten Fall trifft die Adressen-Auflösungs-Antwort 106 vor dem Ablauf des Zeitzählers 104 ein, wie dies durch die horizontale Läge des entsprechenden Pfeils und den durch ein Kreuz gekennzeichneten Ablauf des Zeitzählers 104 dargestellt ist. Die Adressen-Auflösungs-Antwort 106 enthält dabei die bereits eindeutig verifizierten Referenz-IDs sowie eine oder mehrere Listen für die noch nicht eindeutig verifizierten Zielführungselemente. Im Block 107 kann der Benutzer aus diesen Listen eine entsprechende Auswahl vornehmen, um die Menge der Referenz-IDs zu vervollständigen. Der Block 108 enthält dabei lediglich den Hinweis, dass sich der dargestellte Ablauf solange wiederholt, bis die Adressen eindeutig aufgelöst werden konnten. Nachdem alle Referenz-IDs vorliegen, startet das Endgerät 101 eine Routen-Anfrage 109, beispielsweise indem eine verifizierte Startpunkt-Referenz-ID und eine verifizierte Zielpunkt-Referenz-ID an die Zentraleinheit 102 gesendet werden. Auf der Grundlage dieser Daten führt die Zentraleinheit 102 eine Routenberechnung durch. Im dargestellten Fall weist die Route vom Start zum Ziel eine Länge auf, die die Zentraleinheit 102 veranlasst, zunächst nur eine Teilroute zu berechnen. Nach der Berechnung der Teilroute sendet die Zentraleinheit 102 eine Routen-Antwort 112 an das Endgerät 101, wobei die Routen-Antwort 112 entsprechende Routendaten für die Teilroute enthält. Weiterhin enthält die Routen-Antwort vorzugsweise eine Zwischenpunkt-Referenz-ID, die den den Endpunkt der Teilroute festlegenden Zwischenpunkt eindeutig kennzeichnet. Der (rechtzeitige) Eingang der Routen-Antwort 112 wird von dem Endgerät 101 überwacht, indem ein Zeitzähler 110 gestartet wird, kurz nachdem die Routen-Anfrage 109 abgesendet wurde. Im dargestellten Fall geht die Routen-Antwort 112 jedoch vor dem Ablauf des Zeitzählers 110 ein, wie dies der Darstellung von Figur 1 zu entnehmen ist. Im Block 113 beginnt das Endgerät 101 mit der Zielführung. Kurz bevor das Endgerät 101 den Zwischenpunkt erreicht hat, sendet es eine erneute Routen-Anfrage 114 an die Zentraleinheit 102. Der Block 115 enthält den Hinweis, dass die. Zentraleinheit die Route im Allgemeinen in mehrere Teile unterteilt, so dass das Endgerät mehrere Routen-Anfragen stellen muss, bevor das Ziel erreicht wird. Die Routen-Anfrage 114 enthält vorzugsweise die Zwischenpunkt-Referenz-ID, die von der Zentraleinheit 102 als neuer Startpunkt für die Routenberechnung verwendet werden kann. Eine derartige Routenberechnung wird von der Zentraleinheit 102 in Block 117 durchgeführt. Als Antwort auf die Routen-Anfrage 114 sendet die Zentraleinheit 102 eine weitere Routen-Antwort 118 an das Endgerät 101, wobei die Routen-Antwort 118 Routendaten für die Restroute oder eine weitere Zwischenroute enthält. Der (rechtzeitige) Eingang der Routen-Antwort 118 wird von dem Endgerät 101 überwacht, indem kurz nach dem Absenden der Routen-Anfrage 114 ein Zeitzähler 116 gestartet wird. Im dargestellten Fall geht die Routen-Antwort 118 jedoch rechtzeitig ein. Anschließend kann auf Seiten des Endgerätes die Zielführung weiter fortgesetzt werden, was in Figur 1 jedoch nicht mehr dargestellt ist.

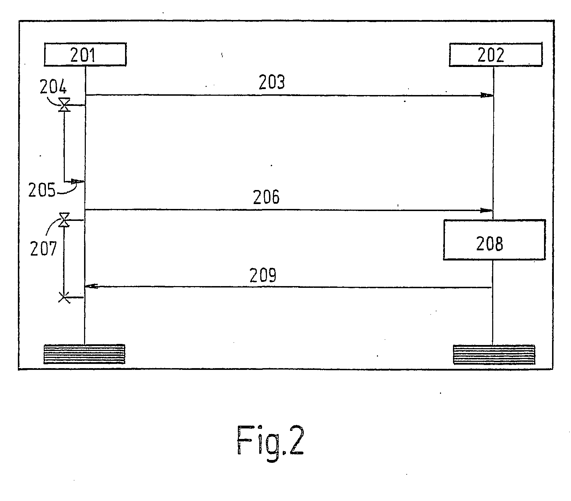

Figur 2 zeigt ein Beispiel für den Ablauf einer Ausführungsform des erfindungsgemäßen Verfahrens, bei dem ein Zeitzähler nach dem Absetzen der Adressen-Auflösungs-Anfrage abläuft, wobei sich die Bedeutung der in Figur 2 verwendeten Bezugszeichen BZ aus der folgenden Tabelle 2 ergibt.

**Tabelle 2**

| BZ | Bedeutung |
|---|---|
| 201 | Endgerät |
| 202 | Zentraleinheit |
| 203 | Adressen-Auflösungs-Anfrage (Adresse) |
| 204 | Zeitzähler |
| 205 | Ablauf des Zeitzählers 204 |
| 206 | Adressen-Auflösungs-Anfrage (Adresse) |
| 207 | Zeitzähler |
| 208 | Adressenauflösung |
| 209 | Adressen-Auflösungs-Antwort ([teilweise] aufgelöste Adressen) |

Gemäß der Darstellung von Figur 2 ergibt sich der folgende Ablauf: ein Endgerät 201 sendet eine Adressen-Auflösungs-Anfrage 203 an eine Zentraleinheit 202. Bei der Adressen-Auflösungs-Anfrage kann es sich dabei um eine Adressen-Auflösungs-Anfrage entsprechend der Adressen-Auflösungs-Anfrage 103 von Figur 1 handeln. Kurz nach dem Absenden der Adressen-Auflösungs-Anfrage 203 startet das Endgerät 201 einen Zeitzähler 204, um den (rechtzeitigen) Eingang einer Adressen-Auflösungs-Antwort zu überprüfen. Gemäß der Darstellung von Figur 2 läuft der Zeitzähler 204 ab, bevor eine Adressen-Auflösungs-Antwort von der Zentraleinheit 202 eingeht. Das Endgerät 201 sendet daher nach dem Ablauf des Zeitzählers 204 eine erneute Adressen-Auflösungs-Anfrage 206 an die Zentraleinheit 202. Kurz nach dem Absenden dieser Adressen-Auflösungs-Anfrage 206 startet das Endgerät 201 wieder einen Zeitzähler 207. Im Block 208 erfolgt die Adressenauflösung. Im Anschluss an die Adressenauflösung sendet die Zentraleinheit 202 eine Adressen-Auflösungs-Antwort 209 an das Endgerät 201, in diesem Fall vor dem Ablauf des Zeitzählers 207. Der weitere Ablauf kann dann dem in Figur 1 dargestellten entsprechen.

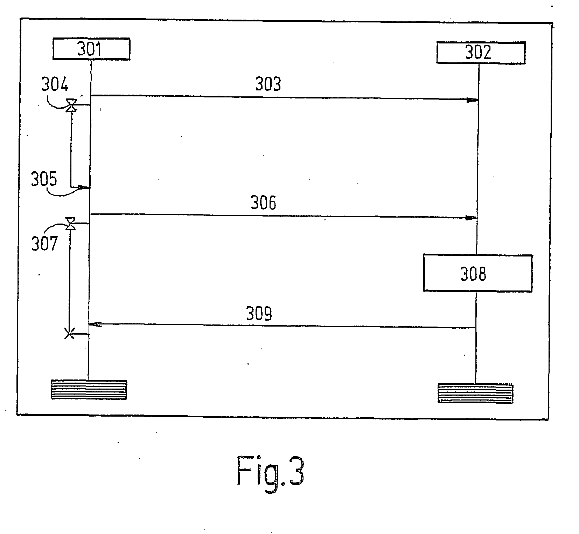

Figur 3 zeigt ein Beispiel für den Ablauf einer Ausführungsform des erfindungsgemäßen Verfahrens, bei dem ein Zeitzähler nach dem Absetzen einer Routen-Anfrage abläuft, wobei sich die Bedeutung der in Figur 3 verwendeten Bezugszeichen BZ aus der folgenden Tabelle 3 ergibt.

**Tabelle 3**

| BZ | Bedeutung |
|---|---|
| 301 | Endgerät |
| 302 | Zentraleinheit |
| 303 | Routenanfrage (Start, Ziel) |
| 304 | Zeitzähler |
| 305 | Ablauf des Zeitzählers 304 |
| 306 | Routenanfrage (Start, Ziel) |
| 307 | Zeitzähler |
| 308 | Routenberechnung |
| 309 | Routenantwort ([Teil-] Route) |

Gemäß der Darstellung von Figur 3 ergibt sich der folgende Ablauf: ein Endgerät 301 sendet eine Routen-Anfrage 303 an eine Zentraleinheit 302. Kurz nach dem Absenden der Routen-Anfrage 303 startet das Endgerät 301 einen Zeitzähler 304, um den (rechtzeitigen) Eingang einer entsprechenden Routen-Antwort zu überprüfen. Im dargestellten Fall sendet die Zentraleinheit 302, beispielsweise aufgrund einer momentanen Überlastung, keine Routen-Antwort auf die Routen-Anfrage 303. Daher sendet das Endgerät 301 nach dem Ablauf des Zeitzählers 304 eine erneute Routen-Anfrage 306 an die Zentraleinheit 302, die daraufhin im Block 308 eine Routenberechnung für eine vollständige Route oder eine Teilroute durchführt und anschließend eine Routen-Antwort 309 an das Endgerät 301 übermittelt, die vor dem Ablauf des Zeitzählers 307 beim Endgerät 301 eintrifft. Der weitere Ablauf kann dann dem in Figur 1 dargestellten entsprechen.

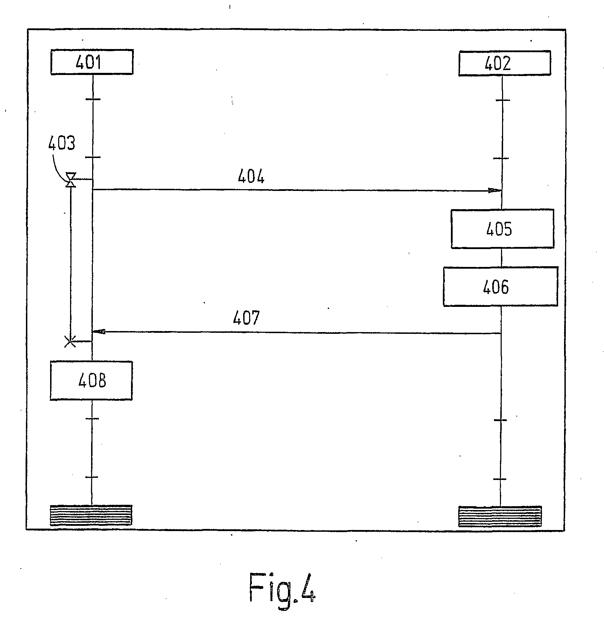

Figur 4 zeigt ein Beispiel für den Ablauf einer Ausführungsform des erfindungsgemäßen Verfahrens, bei dem die Routenberechnung unmittelbar nach einer eindeutigen Adressenauflösung erfolgt, wobei sich die Bedeutung der in Figur 4 verwendeten Bezugszeichen BZ aus der folgenden Tabelle 4 ergibt.

**Tabelle 4**

| BZ | Bedeutung |
|---|---|
| 401 | Endgerät |
| 402 | Zentraleinheit |
| 403 | Zeitzähler |
| 404 | Adressen-Auflösungs-Anfrage (Adresse) |
| 405 | Adressenauflösung |
| 406 | Routenberechnung |
| 407 | Routenantwort ([Teil-] Route |
| 408 | Zielführung |

Gemäß der Darstellung von Figur 4 ergibt sich der folgende Ablauf: ein Endgerät 401 sendet einen Adressen-Auflösungs-Anfrage 404 an eine Zentraleinheit 402. Im Block 405 führt die Zentraleinheit 402 eine Adressenauflösung durch. Im in Figur 4 dargestellten Fall hat die Adressen-Auflösungs-Anfrage 404 Zielführungselementdaten enthalten, die eine vollständige Auflösung der Adresse ermöglichen. Daher wird im Block 406 von der Zentraleinheit 402 eine Routenberechnung durchgeführt, die die vollständige Route oder Teile eine Route betreffen kann, ohne dass eine Adressen-Auflösungs-Antwort an das Endgerät 401 gesendet wird. Statt dessen sendet die Zentraleinheit 402 direkt eine Routen-Antwort 407 an das Endgerät 401. Der (rechtzeitige) Eingang einer Antwort wird dabei vom Endgerät 401 mit Hilfe eines Zeitzählers 403 überprüft. Im Block 408 kann bereits mit der Zielführung begonnen werden. Obwohl dies in Figur 4 nicht dargestellt ist, können selbstverständlich auch in diesem Fall weitere Teilrouten angefordert und berechnet werden.

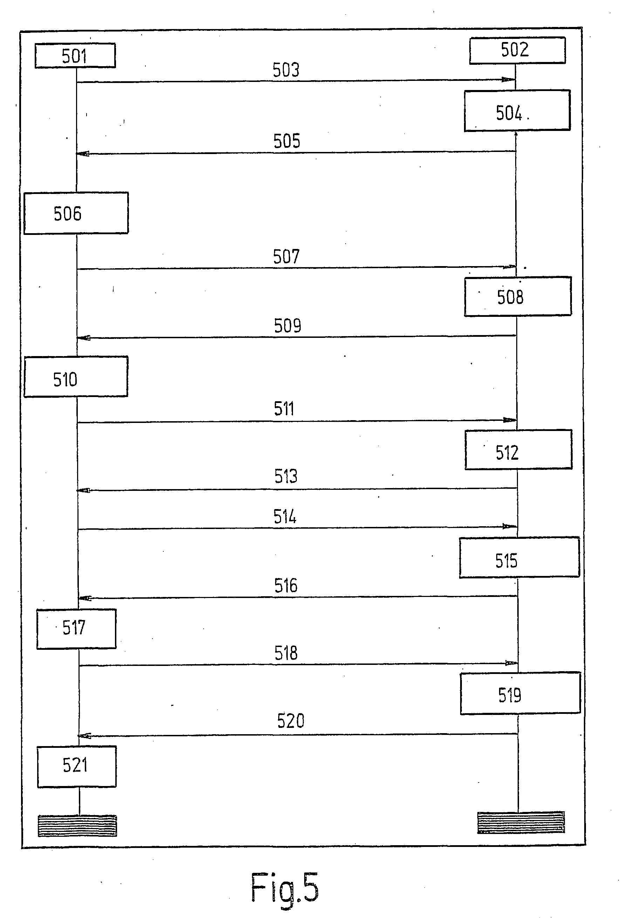

Figur 5 zeigt ein Beispiel für den Ablauf einer Ausführungsform des erfindungsgemäßen Verfahrens unter Praxisbedingungen, wobei sich die Bedeutung der in Figur 5 verwendeten Bezugszeichen BZ aus der folgenden Tabelle 5 ergibt.

**Tabelle 5**

| BZ | Bedeutung |
|---|---|
| 501 | Endgerät |
| 502 | Zentraleinheit |
| 503 | Adressen-Auflösungs-Anfrage (Stadt = "Braunschweig" Straße = "Heirichstrasse") |
| 504 | Adressenauflösung |
| 505 | Adressen-Auflösungs-Antwort (Stadt = "Braunschweig", ID = 5000 |
| | Straße = "Heinrich-Heine Straße", ID = 1234 |
| | Straße = "Heinrichstraße", ID = 2345 ... |
| | Stadt = "Brauchsdorf", ID = 9876 |
| | Stadt = "Braunsdorf", ID = 8765 ... ) |
| 506 | Benutzerauswahl |
| 507 | Adressen-Auflösungs-Anfrage (ID = 2345) |
| 508 | Adressenauflösung |
| 509 | Adressen-Auflösungs-Antwort (Stadt = "Braunschweig", Straße = Heinrichstraße", ID = 2345 |
| | Querstraße = "Südstraße", ID = 23451 |
| | Querstraße = "Nordstraße", ID = 23452 |
| | Querstraße = "Weststraße", ID = 23453) |
| 510 | Benutzerauswahl |
| 511 | Adressen-Auflösungs-Anfrage (Koordinaten = 52.123/10.234) |
| 512 | Adressenauflösung |
| 513 | Adressen-Auflösungs-Antwort (ID = 777777 |
| 514 | Routenanfrage (StartID = 777777, ZielID = 23453) |
| 515 | Routenberechnung |
| 516 | Routenantwort (Routendaten, Zwischenziel-ID = 12345) |
| 517 | Zielführung |
| 518 | Routenanfrage (StartID = 12345, ZielID = 23453) |
| 519 | Routenberechnung |
| 520 | Routenantwort (Routendaten) |
| 521 | Zielführung |

Gemäß der Darstellung von Figur 5 ergibt sich der folgende Ablauf : ein Endgerät 501 sendet eine Adressen-Auflösungs-Anfrage 503 an eine Zentraleinheit 502. Die Adressen-Auflösungs-Anfrage 503 enthält dabei die Zielführungselementdaten Stadt = "braunschweig", Straße = "Heirichstraße". Bei der Eingabe des Straßennamens ist dem Benutzer jedoch ein Fehler unterlaufen, da er eigentlich "Heinrichstraße" eingeben wollte. Im Block 504 beginnt die Zentraleinheit 502 mit der Adressenauflösung. Dabei werden die Datenbankeinträge "Braunschweig", und "Braunsdorf" als wahrscheinlichste Einträge ausgewählt. Zum Straßennamen "Heirichstraße" werden die Einträge "Heinrich-Heine Straße" und "Heinrichstraße" ermittelt. Diese Datenbankeinträge werden gemeinsam mit den entsprechenden in Tabelle 5 angegebenen IDs zu dem Endgerät 501 übertragen, und zwar mit der Adressen-Auflösung-Antwort 505. Daraufhin erfolgt im Block 506 die Benutzerauswahl. Der Benutzer wählt die ID 2345 aus, die der Heinrichstraße in Braunschweig entspricht. Die ID 2345 wird über eine weitere Adressen-Auflösungs-Anfrage 507 an die Zentraleinheit 502 übermittelt. Im Block 508 wird mit der Adressenauflösung fortgefahren. Als Adressen-Auflösungs-Antwort 509 sendet die Zentraleinheit 502 die bereits bestätigten Angaben Stadt = "Braunschweig", Straße = "Heinrichstraße" und ID = 2345. Weiterhin werden als mögliche Querstraßen die "Südstraße", die "Nordstraße" und die "Weststraße" jeweils mit zugehöriger ID übermittelt. Im Block 510 trifft der Benutzer eine weitere Benutzerauswahl hinsichtlich der Querstraße. Er sendet eine erneute Adressen-Auflösungs-Anfrage 511 an die Zentraleinheit 502, wobei die Adressen-Auflösungs-Anfrage 511 Koordinaten = 52.123/10.234 enthält. In Block 512 wird mit der Adressenauflösung für den Startpunkt fortgefahren, der über die Koordinatenangaben aufgelöst wird. Als Adressen-Auflösungs-Antwort 513 sendet die Zentraleinheit 502 die ID 777777 für den Startpunkt. Daraufhin liegen im Endgerät 501 eine Stärtpunkt-Referenz-ID und eine Zielpunkt-Referenz-ID vor, die bei einer Routen-Anfrage 514 von dem Endgerät 501 zu der Zentraleinheit 502 übertragen werden. Auf der Grundlage dieser IDs wird im Block 515 eine Teilroute für den ersten Routenabschnitt berechnet. Die Zentraleinheit 502 sendet eine Routen-Antwort 516 an das Endgerät 501, wobei die Routen-Antwort 516 die Routendaten für die erste Teilroute und eine Zwischenpunkt - Referenz-ID = 12345 enthält. Daraufhin wird im Block 517 mit der Zielführung begonnen. Vorzugsweise kurz vor dem Erreichen des Zwischenpunktes sendet das Endgerät 501 eine erneute Routen-Anfrage an die Zentraleinheit 502. Die Routen-Anfrage 518 enthält dabei als Start-ID die vorher übermittelte Zwischenpunkt-Referenz-ID und die durch die Adressenauflösung bekannte Zielpunkt-Referenz-ID. Auf der Grundlage dieser Referenz-IDs wird im Block 519 die Routenberechnung für die verbleibende Restroute durchgeführt. Im Anschluss daran sendet die Zentraleinheit 502 eine Routen-Antwort 520 an das Endgerät 501, wobei die Routen-Antwort die Routendaten für die Restroute enthält, so dass im Block 521 mit der Zielführung fortgefahren werden kann.

Alle zur Durchführung des erfindungsgemäßen Verfahrens erforderlichen Eingaben sind nicht auf Tastatureingaben beschränkt. Beispielsweise kommen auch Touch-Screen-Eingaben oder Spracheingaben in Betracht.

Der Begriff Zentrale, wie er in der vorliegenden Anmeldung verwendet wird, setzt nicht zwingend voraus, dass alle die Zentrale bildenden Komponenten örtlich benachbart angeordnet sind. Vielmehr kann die Zentrale durch geeignete Hard- und Software gebildet sein, wobei die Hardwarekomponenten durch geeignete LAN- und/oder WAN-Verbindungen, insbesondere das Internet, miteinander verbunden sein.

Auch der Begriff Endgerät ist im Hinblick auf eine funktionelle Einheit zu verstehen, wobei auch in diesem Fall nicht zwingend erforderlich ist, dass alle Komponenten räumlich benachbart, beispielsweise in einem Gehäuse, untergebracht sind.

Die vorhergehende Beschreibung der Ausführungsbeispiele gemäß der vorliegenden Erfindung dient nur zu illustrativen Zwecken und nicht zum Zwecke der Beschränkung der Erfindung. Im Rahmen der Erfindung sind verschiedene Änderungen und Modifikationen möglich, ohne den Umfang der Erfindung sowie ihre Äquivalente zu verlassen.

## Patentansprüche

1. Verfahren, um Navigationsinformationen zwischen einem Endgerät, insbesondere einem Offboard-Fahrzeugnavigationsgerät, und einer Zentrale auszutauschen, wobei die Navigationsinformationen Routeninformationen für wenigstens eine Route zwischen einem Startpunkt und einem Zielpunkt umfassen, welches die folgenden Schritte umfasst:
a) Verifizieren einer Startpunkt-Referenz-ID und/oder Verifizieren von Startkoordinaten und Verifizieren einer Zielpunkt-Referenz-ID und/oder Verifizieren von Zielpunktkoordinaten, und
b) Berechnen von Routendaten und Übermitteln einer zumindest Teile der Routendaten enthaltenden Routen-Antwort an das Endgerät, wobei die Routendaten zumindest in Abhängigkeit von der Länge der Route vom Startpunkt zum Zielpunkt entweder zumindest einer vollständigen Route vom Startpunkt zum Zielpunkt oder zumindest einer Teilroute vom Startpunkt zu einem Zwischenpunkt entsprechen, der zwischen Startpunkt und Zielpunkt liegt, wobei der Zwischenpunkt eine verifizierte Zwischenpunkt-Referenz-ID und/oder verifizierte Zwischenpunktkoordinaten aufweist, wobei die verifizierte Zwischenpunkt-Referenz-ID und/oder die verifizierten Zwischenpunktkoordinaten von der Zentrale an das Endgerät übertragen werden, wobei das Endgerät ein mobiles Endgerät ist, und wobei über das Endgerät oder über eine separate Einrichtung vor dem Erreichen des Zwischenpunktes weitere Routendaten von der Zentrale angefordert werden, wobei die weiteren Routendaten entweder zumindest einer vollständigen Route vom Zwischenpunkt zum Zielpunkt oder zumindest einer Teilroute vom Zwischenpunkt zu einem weiteren Zwischenpunkt entsprechen, und wobei das mobile Endgerät oder die separate Einrichtung bei der Anforderung von weiteren Routendaten die verifizierte Zwischenpunkt-Referenz-ID und/oder die verifizierten Zwischenpunktkoordinaten an die Zentrale überträgt.

2. Verfahren nach einem der vorhergehenden Ansprüche, **dadurch gekennzeichnet, dass** die Zentrale beim Schritt b) weiterhin eine eindeutige Routen-ID an das Endgerät oder eine separate Einrichtung überträgt.

3. Verfahren nach einem der vorhergehenden Ansprüche, **dadurch gekennzeichnet, dass** das mobile Endgerät oder die separate Einrichtung bei der Anforderung von weiteren Routendaten die Routen-ID an die Zentrale überträgt.

4. Verfahren nach einem der vorhergehenden Ansprüche, **dadurch gekennzeichnet, dass** Schritt a) die folgenden Teilschritte umfasst:
a1) Übermitteln einer Adressen-Auflösungs-Anfrage an die Zentrale,
a2) Übermitteln einer Adressen-Auflösungs-Antwort von der Zentrale an das Endgerät oder eine separate Einrichtung, und
a3) Übermitteln einer Routen-Anfrage an die Zentrale.

5. Verfahren nach Anspruch 4, **dadurch gekennzeichnet, dass** beim Schritt a1) und/oder beim Schritt a2) einer oder mehrere der folgenden Parameter an die Zentrale übermittelt werden:
- geographische Koordinaten,
- eine oder mehrere Adressen als Menge von Attributen wie Ort, Strasse, Hausnummer, Postleitzahl,
- eine oder mehrere in der Zentrale bereits verifizierte Referenz-IDs,
- eine oder mehrere Telefonnummern,
- einen oder mehrere Kartenausschnitte,
- geometrische Streckenbeschreibungen,
- eine oder mehrere textliche Umschreibungen,
- eine oder mehrere Tonaufzeichnungen,
- Foto- und/oder Videoaufnahmen,
- Kundeninformationen, insbesondere Nutzer-/Benutzungsprofil wie Kraftfahrzeugtyp, Geschwindigkeitsrahmen, Routenoptimierungswünsche.

6. Verfahren nach Anspruch 4 oder 5, **dadurch gekennzeichnet, dass** beim Schritt a2) einer oder mehrere der folgenden Parameter übermittelt werden:
- eindeutige oder teilweise eindeutige Referenz-IDs für die einzelnen Adressen oder deren Teilattribute wie Ort, Strasse, Hausnummer; Postleitzahl,
- Zeitinformationen als Menge von Attributen wie Jahr, Monat, Tag, Stunde, Minute, Sekunde,
- Nachrichtenzeitstempel,
- Reisezeitwunsch.

7. Verfahren nach einem der Ansprüche 4 bis 6, **dadurch gekennzeichnet, dass** beim Schritt a3) die eindeutig verifizierte Startpunkt-Referenz-ID und/oder die eindeutig verifizierten Startkoordinaten und die eindeutig verifizierte Zielpunkt-Referenz-ID und/oder die eindeutig verifizierten Zielpunktkoordinaten übermittelt werden.

8. Verfahren nach einem der Ansprüche 4 bis 7, **dadurch gekennzeichnet, dass** beim Schritt a3) weiterhin eine oder mehrere der folgenden Informationen übermittelt werden:
- ein oder mehrere Abbruchkriterien für die Routenberechnung, insbesondere maximale Datenmenge, maximale Wartezeit bis zum Datentransfer, Entfernung,
- Codierung von Endgerätefähigkeiten, insbesondere bezüglich der Darstellungsfähigkeiten und/oder der Audiofähigkeiten,
- Benutzerpräferenzen, insbesondere die Art von gewünschten Zusatzinformationen in den Routendaten,
- Zeitinformationen als Menge von Attributen wie Jahr, Monat, Tag, Stunde, Minute, Sekunde,
- personifiziertes Fahrprofil,
- Verkehrsinformationen und/oder Routenstörungen (zum Beispiel manuell, TMC, und so weiter).

9. Verfahren nach einem der vorhergehenden Ansprüche, **dadurch gekennzeichnet, dass** die Routen-Antwort weiterhin eine oder mehrere der folgenden Informationen umfasst:
- Kartenzusatzattribute, insbesondere Distanzen und/ oder Fahrtdauer, Strassenklassen, Strassennamen, grafische und oder akustische Zieiführungsanweisungen,
- Bilder, Foto- und/oder Videoaufnahmen,
- Tonaufnahmen,
- Verkehrsmeldungen,
- Zusatzinformationen wie Werbung
- Datenkopfinformationen, insbesondere Sprach- und/oder Länderkennung, Bezugssystem, verwendete Codierung, Koordinatencodierung, Routendatenformat, Flags über vorhandene Zusatzattribute,
- Zeitinformationen als Menge von Attributen wie Jahr, Monat, Tag, Stunde, Minute, Sekunde,
- Nachrichtenzeitstempel,
- Reisezeit.

10. Verfahren nach einem der vorhergehenden Ansprüche, **dadurch gekennzeichnet, dass** in dem Endgerät und oder in der separaten Einrichtung verifizierte Startpunkt- Referenz-IDs und/oder verifizierte Startkoordinaten und/oder verifizierte Zielpunkt-Referenz-IDs und/oder verifizierte Zielpunktkoordinaten gespeichert werden.

11. Verfahren nach einem der vorhergehenden Ansprüche, **dadurch gekennzeichnet, dass** in der Zentrale benutzerabhängige und/oder endgerätabhängige verifizierte Startpunkt-Referenz-IDs und/oder verifizierte Startkoordinaten und/oder verifizierte Zielpunkt-Referenz-IDs und/oder verifizierte Zielpunktkoordinaten gespeichert werden.

12. Verfahren nach einem der Ansprüche 4 bis 11, **dadurch gekennzeichnet, dass** einer oder mehrere der Teilschritte a1), a2) und a3) wiederholt werden, wenn nach einer vorherbestimmten Zeitspanne keine Antwort eingeht.

13. Verfahren nach einem der vorhergehenden Ansprüche, **dadurch gekennzeichnet, dass** die separate Einrichtung durch ein Mobilfunkendgerät gebildet ist.

14. Verfahren nach einem der vorhergehenden Ansprüche, **dadurch gekennzeichnet, dass** die separate Einrichtung durch einen Computer gebildet ist.

15. Verfahren nach einem der Ansprüche 4 bis 14, **dadurch gekennzeichnet, dass** die Teilschritte a1) und a2) solange abwechselnd wiederholt werden, bis zumindest eine Startpunkt-Referenz-ID und/oder Startkoordinaten und eine Zielpunkt-Referenz-ID und/oder Zielpunktkoordinaten verifiziert sind.

16. Verfahren nach einem der Ansprüche 4 bis 15, **dadurch gekennzeichnet,, dass** der Teilschritt a2) nur dann ausgeführt wird, wenn eine Startpunkt-Referenz-ID und/oder Startkoordinaten und eine Zielpunkt-Referenz-ID und/oder Zielpunktkoordinaten noch nicht verifiziert wurde.

17. Zentrale, die zur Teilnahme an dem Verfahren nach einem der vorhergehenden Ansprüche ausgelegt ist.

18. Endgerät, insbesondere Fahrzeugnavigationsgerät, das zur Teilnahme an dem Verfahren nach einem der vorhergehenden Ansprüche ausgelegt ist.

## Claims

1. Method for exchanging navigation information between a terminal, particularly an offboard vehicle navigation appliance, and a control centre, wherein the navigation information comprises route information for at least one route between a starting point and a destination, which comprises the following steps:
a) a starting point reference ID is verified and/or starting coordinates are verified and a destination reference ID is verified and/or destination coordinates are verified, and
b) route data are calculated and a route response containing at least portions of the route data is transmitted to the terminal, wherein the route data correspond either at least to a complete route from the starting point to the destination or at least to a partial route from the starting point to an intermediate point situated between the starting point and the destination, at least depending on the length of the route from the starting point to the destination, wherein the intermediate point has a verified intermediate point reference ID and/or verified intermediate point coordinates, wherein the verified intermediate point reference ID and/or the verified intermediate point coordinates is/are transmitted from the control centre to the terminal, wherein the terminal is a mobile terminal, and wherein before the intermediate point is reached the terminal or a separate device is used to request further route data from the control centre, wherein the further route data correspond either at least to a complete route from the intermediate point to the destination or at least to a partial route from the intermediate point to a further intermediate point, and wherein the mobile terminal or the separate device transmits the verified intermediate point reference ID and/or the verified intermediate point coordinates to the control centre when requesting further route data.

2. Method according to Claim 1, **characterized in that** in step b) the control centre also transmits an explicit route ID to the terminal or a separate device.

3. Method according to either of the preceding claims, **characterized in that** the mobile terminal or the separate device transmits the route ID to the control centre when requesting further route data.

4. Method according to one of the preceding claims, **characterized in that** step a) comprises the following substeps:
a1) an address resolution query is transmitted to the control centre,
a2) an address resolution response is transmitted from the control centre to the terminal or a separate device, and
a3) a route query is transmitted to the control centre.

5. Method according to Claim 4, **characterized in that** step a1) and/or step a2) involve(s) one or more of the following parameters being transmitted to the control centre:
- geographical coordinates,
- one or more addresses as a set of attributes such as place, street, house number, postcode,
- one or more reference IDs already verified in the control centre,
- one or more telephone numbers,
- one or more map details,
- geometric road descriptions,
- one or more textual transcriptions,
- one or more sound recordings,
- photographs and/or videos,
- customer information, particularly user/use profile such as motor vehicle type, speed framework, route optimization requirements.

6. Method according to Claim 4 or 5, **characterized in that** step a2) involves one or more of the following parameters being transmitted:
- explicit or partially explicit reference IDs for the individual addresses or subattributes thereof such as place, street, house number, postcode,
- time information as a set of attributes such as year, month, day, hour, minute, second,
- message time stamps,
- travel time requirement.

7. Method according to one of Claims 4 to 6, **characterized in that** step a3) involves transmission of the explicitly verified starting point reference ID and/or the explicitly verified starting coordinates and the explicitly verified destination reference ID and/or the explicitly verified destination coordinates.

8. Method according to one of Claims 4 to 7, **characterized in that** step a3) also involves one or more of the following pieces of information being transmitted:
- one or more termination criteria for the route calculation, particularly a maximum volume of data, maximum waiting time for data transfer, range,
- coding of terminal capabilities, particularly regarding the presentation capabilities and/or the audio capabilities,
- user preferences, particularly the type of supplementary information required in the route data,
- time information as a set of attributes such as year, month, day, hour, minute, second,
- personalized driving profile,
- travelling information and/or route disruptions (for example manual, TMC, and so on).

9. Method according to one of the preceding claims, **characterized in that** the route response also comprises one or more of the following pieces of information:
- supplementary map attributes, particularly distances and/or journey times, road classes, road names, graphical and/or audible routing instructions,
- images, photographs and/or videos,
- sound recordings,
- traffic reports,
- supplementary information such as advertising,
- data header information, particularly language and/or country identifier, reference system, coding used, coordinate coding, route data format, flags about available supplementary attributes,
- time information as a set of attributes such as year, month, day, hour, minute, second,
- message time stamps,
- travel time.

10. Method according to one of the preceding claims, **characterized in that** the terminal and/or the separate device is/are used to store verified starting point reference IDs and/or verified starting coordinates and/or verified destination reference IDs and/or verified destination coordinates.

11. Method according to one of the preceding claims, **characterized in that** the control centre is used to store user-dependent and/or terminal-dependent verified starting point reference IDs and/or verified starting coordinates and/or verified destination reference IDs and/or verified destination coordinates.

12. Method according to one of Claims 4 to 11, **characterized in that** one or more of substeps a1), a2) and a3) is/are repeated if no response is received after a predetermined period of time.

13. Method according to one of the preceding claims, **characterized in that** the separate device is formed by a mobile radio terminal.

14. Method according to one of the preceding claims, **characterized in that** the separate device is formed by a computer.

15. Method according to one of Claims 4 to 14, **characterized in that** substeps a1) and a2) are repeated alternately until at least one starting point reference ID and/or starting coordinates and a destination reference ID and/or destination coordinates have been verified.

16. Method according to one of Claims 4 to 15, **characterized in that** substep a2) is executed only if a starting point reference ID and/or starting coordinates and a destination reference ID and/or destination coordinates have not yet been verified.

17. Control centre which is designed to participate in the method according to one of the preceding claims.

18. Terminal, particularly a vehicle navigation appliance, which is designed to participate in the method according to one of the preceding claims.

## Revendications

1. Procédé pour échanger des informations de navigation entre un terminal, notamment un terminal de navigation de véhicule non embarqué, et une centrale, les informations de navigation comprenant des informations d'itinéraire pour au moins un itinéraire entre un point de départ et un point de destination, lequel comprend les étapes suivantes :
a) vérification d'un ID de référence de point de départ et/ou vérification des coordonnées de départ et vérification d'un ID de référence de point de destination et/ou vérification des coordonnées de point de destination, et
b) calcul de données d'itinéraire et communication au terminal d'une réponse d'itinéraire contenant au moins des parties des données d'itinéraire, les données d'itinéraire correspondant, suivant la longueur de l'itinéraire entre le point de départ et le point de destination, soit au moins à un itinéraire complet entre le point de départ et le point de destination, soit au moins à un itinéraire partiel entre le point de départ et un point intermédiaire, lequel se situe entre le point de départ et le point de destination, le point intermédiaire présentant un ID de référence de point intermédiaire vérifié et/ou des coordonnées de point intermédiaire vérifiées, l'ID de référence de point intermédiaire vérifié et/ou les coordonnées de point intermédiaire vérifiées étant transmis par la centrale au terminal, le terminal étant un terminal mobile et des données d'itinéraire supplémentaires étant demandées auprès de la centrale par le biais du terminal ou par le biais d'un dispositif séparé avant d'atteindre le point intermédiaire, les données d'itinéraire supplémentaires correspondant soit au moins à un itinéraire complet entre le point intermédiaire et le point de destination, soit au moins à un itinéraire partiel entre le point intermédiaire et un point intermédiaire supplémentaire, et le terminal mobile ou le dispositif séparé transmettant l'ID de référence de point intermédiaire vérifié et/ou les coordonnées de point intermédiaire vérifiées à la centrale lors de la demande de données d'itinéraire supplémentaires.

2. Procédé selon la revendication 1, **caractérisé en ce qu'**à l'étape b), la centrale transmet en plus un ID d'itinéraire univoque au terminal ou à un dispositif séparé.

3. Procédé selon l'une des revendications précédentes, **caractérisé en ce que** le terminal mobile ou le dispositif séparé, lors de la demande de données d'itinéraire supplémentaires, transmet l'ID d'itinéraire à la centrale.

4. Procédé selon l'une des revendications précédentes, **caractérisé en ce que** l'étape a) comprend les étapes partielles suivantes :
a1) communication d'une demande de résolution d'adresse à la centrale,
a2) communication d'une réponse de résolution d'adresse de la centrale au terminal ou au dispositif séparé, et
a3) communication d'une demande d'itinéraire à la centrale.

5. Procédé selon la revendication 4, **caractérisé en ce qu'**à l'étape a1) et/ou à l'étape a2), un ou plusieurs des paramètres suivants sont communiqués à la centrale :
- coordonnées géographiques,
- une ou plusieurs adresses sous la forme d'un certain nombre d'attributs tels que la ville, la rue, le numéro, le code postal,
- un ou plusieurs ID de référence déjà vérifiés dans la centrale,
- un ou plusieurs numéros de téléphone,
- une ou plusieurs portions de carte,
- des descriptions de tronçons géométriques,
- une ou plusieurs descriptions textuelles,
- un ou plusieurs enregistrements sonores,
- des photographies et/ou des enregistrements vidéo,
- des informations du client, notamment un profil d'utilisateur/d'utilisation tel que le type de véhicule automobile, le cadre de vitesse, les souhaits d'optimisation de l'itinéraire.

6. Procédé selon la revendication 4 ou 5, **caractérisé en ce qu'**à l'étape a2), un ou plusieurs des paramètres suivants sont communiqués :
- des ID de référence univoques ou partiellement univoques pour les adresses individuelles ou leurs attributs partiels tels que la ville, la rue, le numéro, le code postal,
- des informations de temps sous la forme d'un certain nombre d'attributs tels que l'année, le mois, le jour, les heures, les minutes, les secondes,
- un horodatage du message,
- un souhait de temps de trajet.

7. Procédé selon l'une des revendications 4 à 6, **caractérisé en ce qu'**à l'étape a3), l'ID de référence de point de départ vérifié univoque et/ou les coordonnées de départ vérifiées univoques et l'ID de référence de point de destination vérifié univoque et/ou les coordonnées de point de destination vérifiées univoques sont communiqués.

8. Procédé selon l'une des revendications 4 à 7, **caractérisé en ce qu'**à l'étape a3), une ou plusieurs des informations suivantes sont en plus communiquées :
- un ou plusieurs critères d'interruption pour le calcul de l'itinéraire, notamment la quantité de données maximale, le temps d'attente maximum jusqu'au transfert de données, la distance,
- le codage des capacités du terminal, notamment concernant les capacités de représentation et/ou les capacités audio,
- les préférences de l'utilisateur, notamment la nature des informations supplémentaires souhaitées dans les données d'itinéraire,
- des informations de temps sous la forme d'un certain nombre d'attributs tels que l'année, le mois, le jour, les heures, les minutes, les secondes,
- le profil de conduite personnalisé,
- des informations de trafic et/ou des perturbations de l'itinéraire (par exemple manuel, TMC, etc.).

9. Procédé selon l'une des revendications précédentes, **caractérisé en ce que** la réponse d'itinéraire comprend en plus une ou plusieurs des informations suivantes :
- des attributs supplémentaires de carte, notamment distances et/ou durée de trajet, catégories de routes, noms des rues, instructions graphiques et/ou acoustiques de guidage jusqu'à la destination,
- des images, photographies et/ou enregistrements vidéo,
- des enregistrements sonores,
- des messages de trafic,
- des informations supplémentaires comme une publicité,
- des informations d'en-tête de données, notamment identifiant de langue et/ou de pays, système de référence, codage utilisé, codage des coordonnées, format des données d'itinéraire, fanions relatifs aux attributs supplémentaires présents,
- des informations de temps sous la forme d'un certain nombre d'attributs tels que l'année, le mois, le jour, les heures, les minutes, les secondes,
- un horodatage du message,
- le temps de trajet.

10. Procédé selon l'une des revendications précédentes, **caractérisé en ce que** l'ID de référence de point de départ vérifié et/ou les coordonnées de départ vérifiées et/ou l'ID de référence de point de destination vérifié et/ou les coordonnées de point de destination vérifiées sont enregistrés dans le terminal et/ou dans le dispositif séparé.

11. Procédé selon l'une des revendications précédentes, **caractérisé en ce que** les ID de référence de point de départ vérifiés et/ou les coordonnées de départ vérifiées et/ou les ID de référence de point de destination vérifiés et/ou les coordonnées de point de destination vérifiées sont enregistrés dans la centrale en fonction de l'utilisateur et/ou en fonction du terminal.

12. Procédé selon l'une des revendications 4 à 11, **caractérisé en ce qu'**une ou plusieurs des étapes partielles a1), a2) et a3) sont répétées si aucune réponse n'est reçue après un intervalle de temps prédéfini.

13. Procédé selon l'une des revendications précédentes, **caractérisé en ce que** le dispositif séparé est formé par un terminal de radiocommunication mobile.

14. Procédé selon l'une des revendications précédentes, **caractérisé en ce que** le dispositif séparé est formé par un ordinateur.

15. Procédé selon l'une des revendications 4 à 14, **caractérisé en ce que** les étapes partielles a1) et a2) sont répétées en alternance jusqu'à ce qu'au moins un ID de référence de point de départ et/ou des coordonnées de départ et un ID de référence de point de destination et/ou des coordonnées de point de destination soient vérifiés.

16. Procédé selon l'une des revendications 4 à 15, **caractérisé en ce que** l'étape partielle a2) n'est exécutée que si un ID de référence de point de départ et/ou des coordonnées de départ et un ID de référence de point de destination et/ou des coordonnées de point de destination n'ont pas encore été vérifiés.

17. Centrale qui est conçue pour participer au procédé selon l'une des revendications précédentes.

18. Terminal, notamment terminal de navigation de véhicule, qui est conçu pour participer au procédé selon l'une des revendications précédentes.
